# EUROPEAN PATENT SPECIFICATION

(11) **EP 1 011 341 B1**
(45) Date of publication and mention of the grant of the patent: **04.09.2002**
(21) Application number: 98913542.1
(22) Date of filing: 08.04.1998
(51) Int. Cl.: A22C 21/06

(54) **METHOD, APPARATUS AND EVISCERATION SPOON FOR EVISCERATING INTESTINE PACKS OF SLAUGHTERED POULTRY**
VERFAHREN, APPARAT UND LÖFFEL ZUM AUSNEHMEN VON SCHLACHTGEFLÜGEL
PROCEDE, APPAREIL ET CUILLERE SERVANT A L'EVISCERATION DE VOLAILLES ABATTUES

(30) Priority: 10.04.1997 DK 40697
(43) Date of publication of application: 28.06.2000
(73) Proprietor: LINDHOLST & CO. A/S, 8380 Trige (DK)
(72) Inventor: LINDHOLST, Svend, DK-8520 Lystrup (DK)
(74) Representative: Gregersen, Niels Henrik
(86) International application number: DK9800146
(87) International publication number: WO98044806

(56) References cited:
- EP-A- 0 539 134
- US-A- 1 986 195
- US-A- 3 555 593
- US-A- 3 711 897

## Description

The present invention relates to a method for eviscerating intestine packs of slaughtered poultry, and of the type described in the introductory part of claim 1.

By known methods for eviscerating intestine packs of slaughtered poultry, in particular broilers for instance a ring-shaped evisceration device is used for loosen the intestine pack first before it partly is taken out, that is that most of the intestine pack, which still is connected inside the broiler, is hanging down along the outside of the broiler, until it has passed the veterinary control. It is furthermore known to use a plate-shaped evisceration device to loosen the intestine pack combined with a socalled grabber for eviscerating the total intestine pack consisting of organs and intestine, which after evisceration hang down from the grabber. However, there is still a risk that the intestine pack may touch the outside of the broiler, before the intestine pack is hung over to a separate conveyor, which in relation to veterinary inspection is moved synchron parallel with the conveyor, in which the broiler still is suspended, so that the belonging intestine pack and broiler pass simultaneously the veterinary control. It is obvious, that such evisceration methods consist an obvious possibility for cross-contamination during the slaughtering process, as the individual broilers further can touch each other.

However, this known problem with bacteria-infected broilers does not only occur at the poultry slaughterhouses. Nevertheless it is not possible to avoid to worsen the problem during the known handling of slaughtered poultry during the slaughtering process, as very few bacteria infected broilers almost inevitably cause that a large number of slaughtering broilers are cross-contaminated with bacteria.

EP-A1-0 539 134 discloses an evisceration spoon being elongate in formation and includes two elongate side arms which are spaced apart along the length thereof. The side arms are pivotally mounted relative to each other and are spring biased into a first mode in which they form a closed elangate loop.

US-A-3 711 897 discloses a method and an apparatus for eviscerating poultry wherein a combined evisceration spoon and grabber is utilised. The eviscerating apparatus utilizing two opposed spoon members adapted for insertion into the body cavity of the poultry to be eviscerated. The spoons are seperately pivotally mounted for rotation in a vertical plane upon a carriage atteched to a conveyor.

On this background the invention has for its purpose to provide an improved method for handling of slaughtered poultry, in particular broilers, during the slaugtering process, so that the said possibility for cross-contamination may be avoided or reduced - and where a more safe evisceration of the intestine packs of slaughtered poultry may be obtained.

The method according to the invention is distinctive in that said evisceration spoon is combined with the grabber, that the movement of the evisceration spoon and grabber in relation to the broiler is controlled in such a manner, that a foremost curved part of the grabber is placed in an arched recess in a closed back of the evisceration spoon, that the evisceration spoon and the grabber immediately after the insertion from above in the body of the broiler are swung outwardly/downwardly close along the breast bone of the broiler before the evisceration spoon and the grabber again are moved inwardly/downwardly and encircle the intestine pack, that the evisceration spoon thereafter alone is moved upwardly along the back of the broiler at the same time that a foremost end of the grabber is opened, that the back of the broiler is pressed -outwardly, so that the open grabber is grabbing around the gullet between prestomach (proventriculus) and crop, when it thereafter is closed again, thereafter the evisceration spoon is moved out of the broiler and further upwards along a back plate serving that the intestine pack remains encircled in the evisceration spoon, until the grabber, which also is moved out of the broiler, and which still is grabbing around the gullet between prestomach and crop, is able to take over the intestine pack.

By means of simple provisions it is hereby obtained, that the use of the combined evisceration spoon and grabber may result in a more precise loosening and fixing of the intestine pack in the grabber and at the same time an encircling of the intestine pack in the belonging backwardly closed evisceration spoon, so that the intestine pack is kept away from the outside of the broiler. Furthermore a more careful loosening of the intestine pack is obtained with reduced risk for tearing open the intestines, so that the said possibility for cross-contamination furthermore may be reduced or avoided.

Appropriately according to the invention the intestine pack by means of said back plate is kept encircled in the evisceration spoon until this is swung free from the broiler, whereafter the intestine pack, which still is fixed by the grabber, either is hung over to a separate hanging conveyor or is released over another conveying means, such as a belt conveyor provided with partitions.

Furthermore the invention relates to an apparatus for eviscerating intestine packs from slaughtered poultry, in particular broilers, cf. the described method and comprising a number of evisceration devices each consisting of an evisceration spoon and a grabber, which evisceration apparatus is distinctive in that the evisceration spoon is combined with the grabber and is provided with an arched, closed back, that the grabber has an arched foremost end part, which is adapted to engage with similar arched recess in the back wall of the eviscera-tion spoon, said apparatus comprising moving means adapted for movement of the evisceration spoon and the grabber in such a manner that the evisceration spoon with arched front part of grabber placed in said back recess from above may be inserted in the broiler and moved forwardly/downwardly along the breast bone of the carcass of the broiler before the evisceration spoon and the grabber are moved forwardly/downwardly to encircle the intestine pack and carry this upwardly along the back of the broiler, control means for opening the crabber, moving means adapted to press the back of the broiler forwardly, so that the open crabber is able to grab around the gullet between prestomach and crop, when the crabber is closed again, guiding plate means placed close to the back of the broiler and adapted to encircle the intestine pack in the hollow evisceration spoon, when this is moved further upwardly out of the broiler, until the grabber, which also is moved out of the broiler, and still is grabbing around the gullet between prestomach and crop, is able to take over the intestine pack.

Appropriately said guiding plate means of the evisceration apparatus according to the invention are such provided, that the intestine pack may be kept encircled in the evisceration spoon until it is swung free of the broiler.

Furthermore the invention relates to an evisceration spoon for use by the method respectively the apparatus, which evisceration spoon is destinctive in that it is provided with closed, arched back having an external arched recess adapted to receive a corresponding arched front part of a grabber.

The invention is explained in more detail in the following with reference to the drawing, in which:-
- Fig. 1: shows schematic views A-N illustrating the movement of the evisceration spoon and grabber by the method according to the invention,
- Figs. 2A-2C: show mutual position of evisceration spoon and grabber, the arched front part of which is closed by the movement pattern cf. Fig. 1 A-H,
- Figs. 3A-3C: show mutual position of evisceration spoon and grabber, the arched front part of which is open by the movement pattern cf. Fig. 1 and M,
- Figs. 4A-4C: show mutual position of evisceration spoon and grabber, the arched front part of which is closed by the movement pattern cf. Fig. 1 J-L and N, while
- Figs. 5A-5D: show a preferred embodiment for an evisceration spoon with arched, closed back according to the invention,

The defined evisceration apparatus is in a known manner constructed in connection with a turning wheel of a hanging conveyor, via which broilers successively are supplied in such a manner, that the broilers, which during the passage through the evisceration apparatus still are suspended in legs or knees, have the back turned inwardly against the axis of the turning wheel.

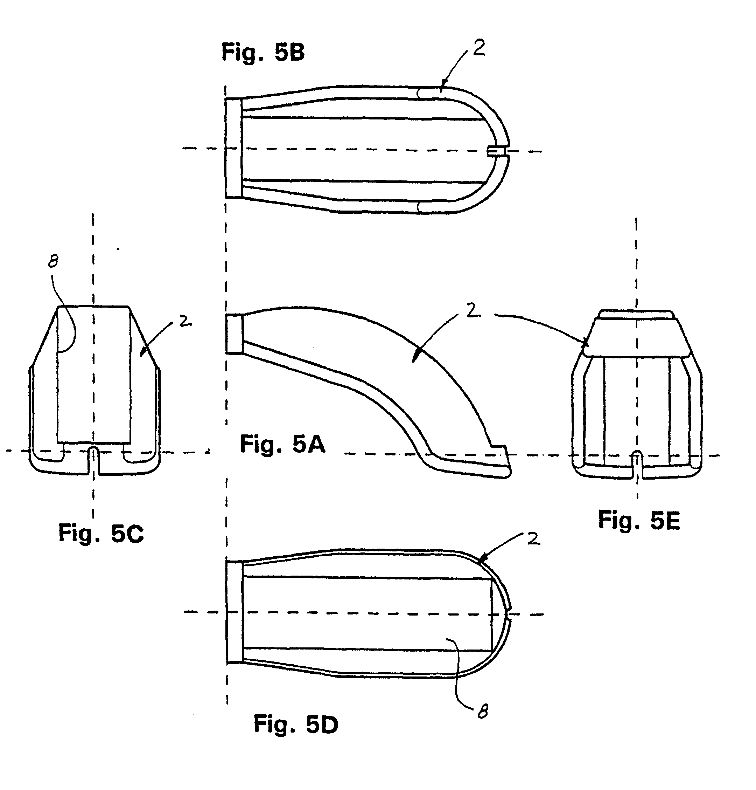

The evisceration apparatus comprises a number of uniform tools, which in known manner each are arranged on not shown vertical sliding rods, and which each comprising an - evis-ceration spoon 2 with belonging grabber 4, whereof only a foremost arched part 6 is shown in the drawing. The back of the evisceration spoon 2 is arched and -provided with a recess 8 (Figs. 5C and 5D), which is adapted for receiving the foremost arched part 6 of the grabber 4.

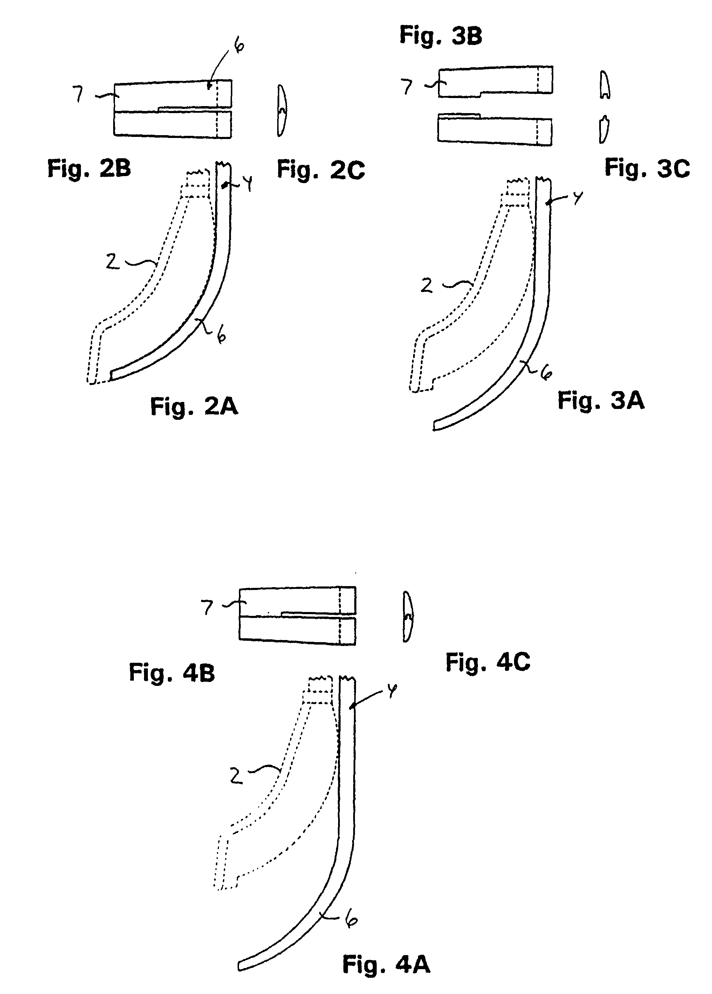

In known manner the outmost end part 7 of the grabber 4 is - as shown in Figs. 2B - 2C, 3B - 3C and 4B - 4C - adapted to be opened and closed, so that the grabber - as below-mentioned - may grab around the gullet.

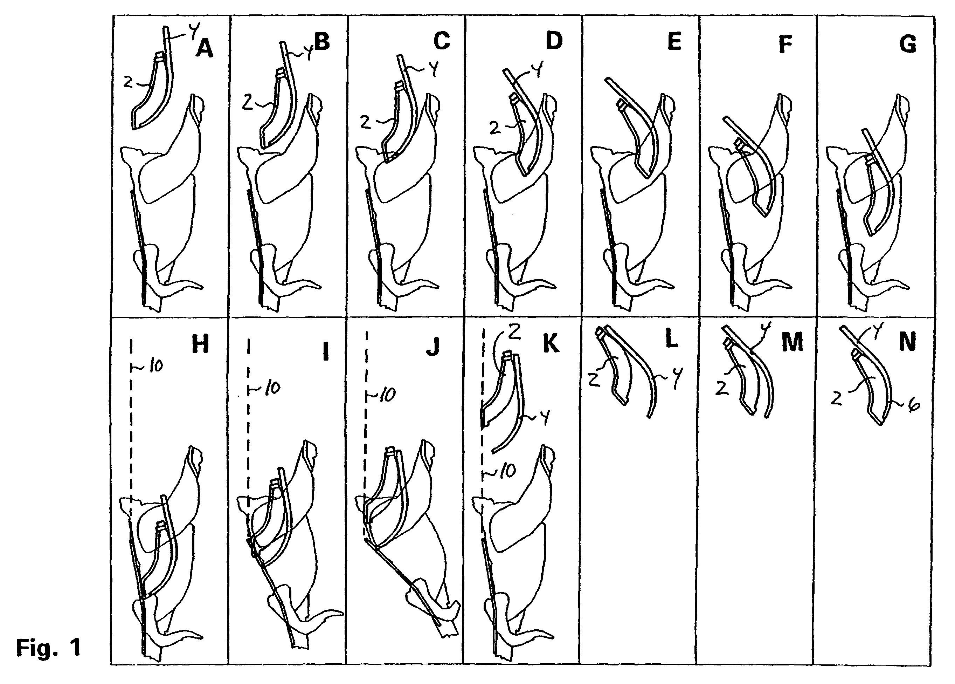

As illustrated in Figs. 1A - 1G the evisceration spoon 2 is inserted with the foremost arched part 6 of the grabber 4 placed in said arched recess 6 in the back of the spoon from above in the cavity of the broiler, whereafter the evisceration spoon is swung outwardly/downwardly close along the breast bone of the broiler before the evisceration spoon 2 again is moved inwardly/downwardly (Fig. 1H) and encircles the intestine pack, which now is placed in the hollowness of evisceration spoon against the back of the cavity of the broiler. In Fig. 1I the back of the broiler is pressed outwardly, so that the gullet between prestomach (proventriculus) and crop is moved into the open front part of the grabber 4. In Figs. 1J - 1L this is closed, that is while the broiler again is moved backwardly and the evisceration spoon 2 cf. Figs. lJ - 1K is moved upwardly along the back of the broiler and further upwardly entirely out of the broiler along a back plate 10, so that the intestine pack remains encircled in the hollow evisceration spoon 2, while front part of the grabber 4 still is grabbing around the gullet between prestomach and crop.

In Fig 1L the evisceration spoon 2 is moved upwardly again, so that the intestine pack - after the broiler has left the apparatus - is allowed to fall out of the evisceration spoon, that is that the intestine pack now hangs down from the still closed front part of the grabber 4. In Fig. 1M the intestine pack is released again from the grabber 4 either for hung over (transfer) to a separate hanging conveyor ensuring that the intestine pack follows its belonging broiler during passage of the veterinary control, or for releasing down in another conveying means, such as a belt conveyor provided with partitions. In Fig. IN the evisceration spoon 2 - possibly after cleaning and/or disinfection - again is ready to be inserted into a new broiler etc.
Figs. 2A, 3A and 4A show the mutual displacable position of the evisceration spoon 2 and grabber 4, of which the closing/opening status of its front part 6 - as above-mentioned - furthermore appear from Figs. 2B - 2C, 3B - 3C and 4B - 4C; while the shape of the evisceration spoon 2 itself more detailed appears from Figs. 5A - 5E.

It should be understood, that the intestine pack during the evisceration operation itself in relation to the method according to the invention is threated so carefully, that the intestines are not torn open, just as the intestine pack at no time is allowed to touch the outside of the broiler, because the intestine pack is encircled by the evisceration spoon 2, until the broiler has left the apparatus.

In other words the invention relates to a very considerable improvement in relation to earlier common method, where there just was maximum risk for cross-contamination at the secondary slaugthering line, where cutting open and eviscerating etc. is carried out, as the bacteria first of all are to be find in the intestine pack. During evisceration of the entrails the broiler is as mentioned suspended in legs or knees, that is that entrails in form of organs and intestine pack immediately after the evisceration earlier was allowed to hang down along the outside of the broiler among others for veterinary inspection. And it is obvious, that exactly this old known method of evisceration creates an open possibility for cross-contamination during the slaughtering process, as the individual broilers further can touch each other.

## Claims

1. A method for eviscerating intestine packs of slaughtered poultry, in particular broilers, and by which method broilers suspended in legs or joints are passing an evisceration apparatus provided in connection with a turning wheel between two hanging conveyor sections and comprising a number of evisceration devices each comprising a evisceration spoon (2) and a grabber (4), and where the back of the broilers by passage through the evisceration apparatus is turned towards the center axis of the apparatus, ***characterized* in that** said evisceration spoon (2) is combined with the grabber (4), that the movement of the evisceration spoon (2) and grabber (4) in relation to the broiler is controlled in such a manner, that a foremost curved part (6) of the grabber (4) is placed in an arched recess (8) in a closed back of the evisceration spoon (2), that the evisceration spoon (2) and the grabber (4) immediately after the insertion from above in the body of the broiler are swung outwardly/downwardly close along the breast bone of the broiler before the evisceration spoon (2) and the grabber (4) again are moved inwardly/downwardly and encircle the intestine pack, that the evisceration spoon (2) thereafter alone is moved upwardly along the back of the broiler at the same time that a foremost end (7) of the grabber (4) is opened, that the back of the broiler is pressed outwardly, so that the open grabber (4) is grabbing around the gullet between prestomach and crop, when it thereafter is closed again, thereafter the evisceration spoon (2) is moved out of the broiler and further upwards along a back plate (10) serving that the intestine pack remains encircled in the evisceration spoon (2), until the grabber (4), which also is moved out of the broiler, and which still is grabbing around the gullet between prestomach and crop, is able to take over the intestine pack.

2. A method according to claim 1, ***characterized* in that** the intestine pack by means of said back plate (10) is kept encircled in the evisceration spoon (2) until it is swung free from the broiler, whereafter the intestine pack, which still is fixed by the grabber, either is hung over to a separate hanging conveyor or is released over another conveying means, such as a belt conveyor provided with partitions.

3. An apparatus for eviscerating intestine packs of slaughtered poultry, in particular broiler cf. the method according to claim 1 and comprising a number of evisceration devices each consisting of an evisceration spoon (2) and a grabber (4), ***characterized*** **in that** the evisceration spoon (2) is combined with the grabber and is provided with an arched, closed back, that the grabber (4) has an arched foremost end part (6), which is adapted to engage with similar arched recess (8) in the back wall of the evisceration spoon (2), said apparatus comprising moving means adapted for movement of the evisceration spoon (2) and the grabber (4) in such a manner that the evisceration spoon (2) with arched front part (6) of grabber (4) placed in said back recess (8) from above may be inserted in the broiler and moved forwardly/downwardly along the breast bone of the carcass of the broiler before the evisceration spoon (2) and the grabber (4) are moved forwardly/downwardly to encircle the intestine pack and carry this upwardly along the back of the broiler, control means for opening the crabber (4), moving means adapted to press the back of the broiler forwardly, so that the open crabber (4) is able to grab - around the gullet between prestomach and crop, when the crabber (4) is closed again, guiding plate means (10) placed close to the back of the broiler and adapted to encircle the intestine pack in the hollow evisceration spoon (2), when this is moved further upwardly out of the broiler, until the grabber (4), which also is moved out of the broiler, and still is grabbing around the gullet between prestomach and crop, is able to take over the intestine pack.

4. An evisceration apparatus according to claim 3, ***characterized* in that** said guiding plate means (10) are such provided, that the intestine pack may be kept encircled in the evisceration spoon (2) until it is swung free of the broiler.

5. An evisceration apparatus (2) for use by the method according to claim 1 and in the evisceration apparatus according to claim 3, ***characterized* in that** it is provided with closed, arched back having an external arched recess (8) adapted to receive a corresponding arched front part (6) of a grabber (4).

## Patentansprüche

1. Verfahren zum Ausnehmen vom Eingeweide von Schlachtgeflügel, insbesondere Schlachthähnchen, und durch welches Verfahren Schlachthähnchen, die in den Beinen oder in Gelenken aufgehängt sind, an ein Ausnahmeapparat vorbeipassieren, das in Verbindung mit einem Drehrad zwischen zwei Suspensionsförderersektionen vorgesehen ist, und das eine Anzahl von Ausnahmevorrichtungen umfasst, die je einen Ausnahmelöffel (2) und einen Greifer (4) umfasst, und wobei der Rücken der Schlachthähnchen durch Passieren durch das Ausnahmeapparat gegen die zentrale Achse des Apparats gedreht wird, **dadurch gekennzeichnet, dass** der erwähnte Ausnahmelöffel (2) mit dem Greifer (4) kombiniert ist, dass die Bewegung des Ausnahmelöffels (2) und des Greifers (4) im Verhältnis zum Schlachthähnchen, auf einer solchen Weise kontrolliert wird, dass ein vorderster gebogener Teil (6) des Greifers (4) in einer gewölbten Vertiefung (8) in einer geschlossenen Hinterseite des Ausnahmelöffels (2) angebracht ist, dass der Ausnahmelöffel (2) und der Greifer (4) sofort nach der Einführung von oben in den Körper des Schlachthähnchens nach außen/nach unten nahe entlang dem Brustbein des Schlachthähnchens geschwungen werden, bevor der Ausnahmelöffel (2) und der Greifer (4) wieder nach innen/nach unten bewegt werden, und das Eingeweide umschließen, dass der Ausnahmelöffel (2) danach allein nach oben entlang dem Rücken des Schlachthähnchens bewegt wird, gleichzeitig damit dass ein vorderste Ende (7) des Greifers (4) geöffnet wird, dass der Rücken des Schlachthähnchens nach außen gepresst wird, damit dass der geöffnete Greifer (4) um die Speisröhre zwischen Vormagen und Kropf, wenn er danach wieder geschlossen wird, wonach der Ausnahmelöffel (2) aus dem Schlachthähnchen, und weiter nach oben entlang der Hinterplatte (10) bewegt wird, die dazu dient, dass das Eingeweide im Ausnahmelöffel (2) umschlossen bleiben, bis der Greifer (4), der auch aus dem Schlachthähnchen bewegt wird, und der immer noch um die Speisröhre zwischen Vormagen und Kropf greift, das Eingeweide übernehmen kann.

2. Verfahren nach Anspruch 1, **dadurch gekennzeichnet, dass** das Eingeweide mittels der erwähnten Hinterplatte (10) im Ausnahmelöffel (2) umschlossen gehalten wird, bis es vom Schlachthähnchen freigeschwungen wird, wonach das Eingeweide, das immer noch vom Greifer fixiert ist, entweder zu einem separaten Suspensionsförderer aufgehängt wird, oder dass es über ein anderes Beförderungsmittel freigegeben wird, so wie über einen Bandförderer, der mit Trennwänden vorgesehen ist.

3. Apparat zum Ausnehmen vom Eingeweide von Schlachtgeflügel, insbesondere Schlachthähnchen, vergleiche das Verfahren nach Anspruch 1 und eine Anzahl von Ausnahmevorrichtungen umfassend, die je aus einem Ausnahmelöffel (2) und aus einem Greifer (4) besteht, **dadurch gekennzeichnet, dass** der Ausnahmelöffel (2) mit einem Greifer kombiniert ist, und mit einer gewölbten geschlossenen Hinterseite vorgesehen ist, dass der Greifer (4) einen gewölbten oberen Endteil (6) ausweist, der dazu angepasst ist, mit einer ähnlichen gewölbten Vertiefung (8) in der Hinterwand des Ausnahmelöffels (2) einzugreifen, wobei das erwähnte Apparat Bewegungsmittel umfasst, die der Bewegung des Ausnahmelöffels (2) und des Greifers (4) auf einer solchen Weise angepasst sind, dass der Ausnahmelöffel (2), dessen gewölbter vordere Teil (6) des Greifers (4) in erwähnter hinteren Vertiefung (8) von oben in den Schlachthähnchen eingeführt werden kann, und nach vorne/nach unten entlang dem Brustbein des Schlachtkörpers vom Schlachthähnchen bewegt werden kann, bevor der Ausnahmelöffel (2) und der Greifer (4) nach vorne/nach unten bewegt werden, um das Eingeweide zu umschließen, und diese nach oben entlang dem Rücken des Schlachthähnchens zu tragen, Kontrollmittel zum Öffnen des Greifers (4), Bewegungsmittel, die dazu angepasst sind, den Rücken des Schlachthähnchens nach vorne zu pressen, damit dass der geöffnete Greifer (4) um die Speisröhre zwischen Vormagen und Kropf greifen kann, wenn der Greifer (4) wieder geschlossen wird, Führungsplattenmittel (10), die nahe zum Rücken des Schlachthähnchens angebracht sind, und die dazu angepasst sind, die Eingeweide im hohlen Ausnahmelöffel (2) umzuschließen, wenn dieser weiter nach oben aus dem Schlachthähnchen bewegt wird, bis der Greifer (4), der auch aus dem Schlachthähnchen bewegt wird, und immer noch um die Speisröhre zwischen Vormagen und Kropf greift, das Eingeweide übernehmen kann.

4. Ausnahmeapparat nach Anspruch 3, **dadurch gekennzeichnet, dass** die Führungsplattenmittel (10) so vorgesehen sind, dass das Eingeweide im Ausnahmelöffel (2) umschlossen gehalten werden kann, bis es vom Schlachthähnchen freigeschwungen ist.

5. Ausnahmeapparat (2) zum Gebrauch durch das Verfahren nach Anspruch 1 und im Ausnahmeapparat nach Anspruch 3, **dadurch gekennzeichnet, dass** es mit einer geschlossenen, gewölbten Hinterseite, die eine externe gewölbte Vertiefung (8) ausweist, die dazu angepasst ist, die entsprechende gewölbte Vorderteil (6) des Greifers (4) zu empfangen.

## Revendications

1. Procédé pour l'éviscération de paquets de viscères de volailles abattues, en particulier des poulets de. boucherie, et par lequel procédé des poulets de boucherie suspendus dans les jambes ou les articulations passent un appareil d'éviscération prévu en relation avec une roue tournante entre deux sections de convoyeur en pendaison et comprenant un nombre de dispositifs d'éviscération comprenant chacun une cuillère (2) d'éviscération et une pince (4) et ou le dos des poulets de boucherie lors du passage à travers l'appareil d'éviscération est tourné vers l'axe central de l'appareil, **caractérisé** en que ladite cuillère d'éviscération (2) est combinée avec la pince (4), que le mouvement de la cuillère d'éviscération (2) et la pince (4) par rapport au poulet de boucherie est contrôlé de sorte qu'une partie courbée avant (6) de la pince (4) est placée dans un évidement cintré (8) dans un dos fermé de la cuillère d'éviscération (2), que la cuillère d'éviscération et la pince (4) tout de suite après l'insertion du haut dans le corps du poulet de boucherie sont pivotées vers l'extérieur/vers le bas tout près de l'os de la poitrine du poulet de boucherie avant que la cuillère d'éviscération (2) et la pince (4) à nouveau soient déplacées vers l'intérieur/vers le bas et encerclent le paquet de viscères, que la cuillère d'éviscération (2) seule ensuite est déplacée vers le haut tout au long du dos du poulet de boucherie en même temps qu'une extrémité avant (7). de la pince (4) est ouverte, que le dos du poulet de boucherie est pressé vers l'extérieur, de sorte que la pince ouverte (4) saisit le creux entre le pré-estomac et le jabot, quand elle est fermée par la suite, après la cuillère d'éviscération (2) est enlevée du poulet de boucherie et plus loin vers le haut tout au long d'une plaque arrière (10) destinée à assurer que le paquet de viscères est gardé encerclé dans la cuillère d'éviscération (2) jusqu'à ce que la pince (4), qui aussi est enlevée du poulet de boucherie et qui toujours encercle le creux entre le pré-estomac et le jabot, est capable de prendre charge du paquet de viscères.

2. Procédé selon la revendication 1, **caractérisé en ce que** la paquet de viscère au moyen de ladite plaque arrière (10) est maintenu encerclé dans la cuillère d'éviscération (2) jusqu'à ce qu'elle est libérée du poulet de boucherie, après quoi le paquet de viscères qui toujous est fixé par la pince, soit est suspendu à un convoyeur de suspension séparé soit est relâché sur d'autres moyens de convoyage, comme par exemple une courroie transporteuse avec compartiments.

3. Appareil pour l'éviscération de paquets de viscères de volailles abattues, en particulier des poulets de boucherie conformément au procédé selon la revendication 1 et comprenant un nombre de dispositifs d'éviscération chacun comprenant une cuillère d'éviscération (2) et une pince (4), **caractérisé en ce que** la cuillère d'éviscération (2) est combinée avec la pince et est prévue d'un dos cintré fermé, que la pince (4) comporte une extrémité avant (6) cintrée (6) qui est destiné à s'engager avec un évidement cintré similaire (8) dans la paroi arrière de la cuillère d'éviscération (2), ledit appareil comportant des moyens de mouvement destinés à déplacer la cuillère d'éviscération (2) et la pince (4) dans une telle manière que la cuillère d'éviscération (2) avec partie frontale cintrée (6) de la pince (4) placée dans ledit évidement de dos (8) du haut peut être insérée dans le poulet de boucherie et déplacée vers l'avant/vers le bas tout au long de l'os de poitrine de la carcasse du poulet de boucherie avant que la cuillère d'éviscération (2) et la pince (4) soient déplacées vers l'avant/vers le bas pour encercler le paquet de viscères et le porter vers le haut tout au long du dos du poulet de boucherie, des moyens de contrôle pour ouvrir la pince (4), des moyens de déplacement pour presser le dos du poulet de boucherie vers l'avant, de sorte que la pince ouverte (4) est capable de pincer - autour du creux entre le pré-estomac et le jabot, quand la pince (4) est refermée, des moyens de plaque de guidage (10) placés près du dos du poulet de boucherie et destinés à encercler le paquet de viscères dans une cuillère d'éviscération creuse (2), quand elle est déplacée plus loin vers le haut sortant du poulet de boucherie, jusqu'à ce que la pince (4) qui aussi est déplacée en dehors du poulet de boucherie et toujours encercle le creux entre le pré-estomac et le jabot, soit capable de prendre charge du paquet de viscères.

4. Appareil d'éviscération selon la revendication 3, **caractérisé** en ce lesdits moyens de plaques de guidage (10) sont prévus de sorte que le paquet de viscères peut être maintenu encerclé dans la cuillère d'éviscération (2) jusqu'à ce qu'elle soit libérée de poulet de boucherie.

5. Appareil d'éviscération (2) pour l'utilisation du procédé selon la revendication 1 et dans l'appareil d'éviscération selon la revendication 3, **caractérisé en ce qu'**il est prévu avec un dos cintré fermé comprenant un évidement cintré extérieur (8) destiné à recevoir une partie frontale cintrée correspondante (6) de la pince (4).
